# DEMANDE DE BREVET EUROPEEN

(11) **EP 2 103 467 A1**
(43) Date de publication de la demande: **23.09.2009**
(21) Numéro de dépôt: 09350002.3
(22) Date de dépôt: 06.03.2009
(51) Int. Cl.: B60J 7/06

(54) **Toit découvrable**

(30) Priorité: 20.03.2008 FR 0801544
(71) Demandeur: Heuliez, 79140 Cerizay (FR)
(72) Inventeur: Guillez, Jean Marc, 79140 Cirières (FR)
(74) Mandataire: Tournel, Jean Louis

(57) **Abrégé**

L'invention a pour objet un toit découvrable pour véhicule automobile comportant une couverture 2 souple qui, fermant une ouverture dans une position de service, peut être déplacée vers une position rangée, cette couverture souple étant soutenue par des éléments 3 transverses, ce toit étant **caractérisé en ce que** les éléments transverses sont des lamelles 3 et sont au moins jointives lorsque le toit est à l'état de service pour constituer une paroi anti-intrusion.

## Description

L'invention se rapporte à un toit découvrable pour véhicule automobile.

Il est connu un toit comportant localement un panneau rigide fermant une ouverture. Ce panneau rigide peut être coulissant ou démontable de sorte à découvrir partiellement le véhicule.

Lorsqu'il est coulissant, l'étendue du panneau doit tenir compte de son déplacement ce qui en restreint fortement la surface.

Lorsqu'il est démontable; se pose le problème du rangement et la facilité de manutention.

On connait également des toits découvrables composés d'une toile souple renforcée localement par des baleines ou des arceaux. Ce système bien connu permet de découvrir une grande ouverture. On lui reproche cependant de ne pas offrir de résistance aux intrusions par découpe de la toile ainsi qu'un défaut de maitrise du rangement de la toile en position compactée.

Il est connu de placer sous cette toile souple des traverses épaisses extrudées (de4217151) qui comporte des gorges sur chaque bord afin de loger un joint. Ce type de traverse est nécessairement plane. A l'état rangé, le toit occupe beaucoup de place dans l'ouverture du toit en raison de l'épaisseur des traverses.

L'invention se propose d'apporter une solution.

A cet effet, l'invention a pour objet un toit découvrable pour véhicule automobile comportant une couverture souple qui, fermant une ouverture dans une position de service, peut être déplacée vers une position rangée, cette couverture souple étant soutenue par des éléments transverses, ce toit étant caractérisé en ce que les éléments transverses sont des lamelles minces d'épaisseur constantes qui sont au moins jointives lorsque le toit est à l'état de service pour constituer une paroi anti-intrusion et ces lamelles minces ont une section transversale conformée pour les rendre plus rigides.

L'invention sera bien comprise à l'aide de la description ci après faite à titre d'exemple non limitatif en regard du dessin qui représente schématiquement :
FIG 1 : Un toit selon l'invention en position de service
FIG 1A : Le détail 1A de la figure 1

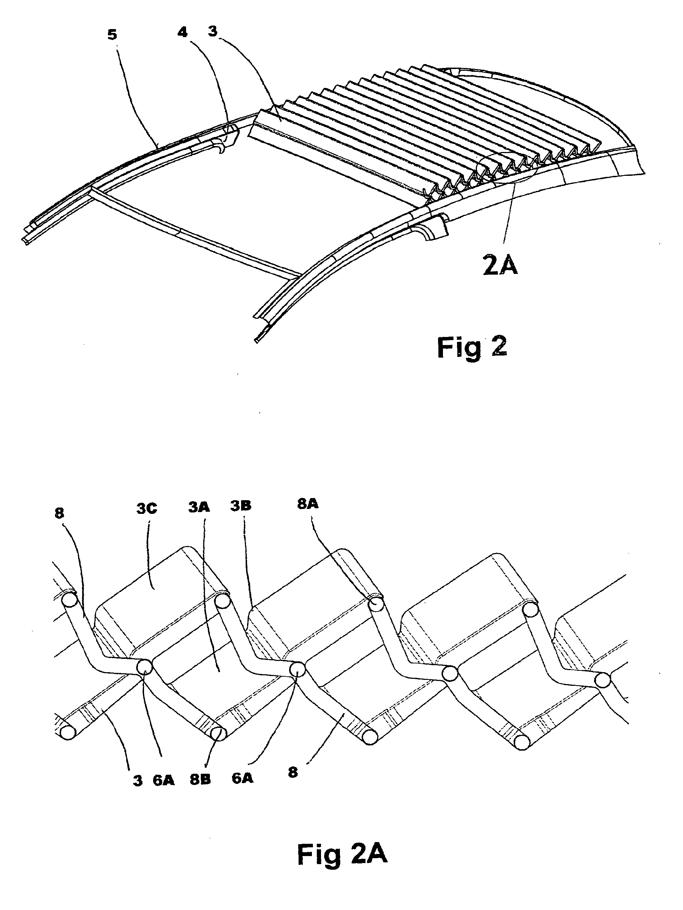

FIG 2 : Le toit selon l'invention en position semi ouverte
FIG 2A : Le détail 2A de la figure 2 sans la couverture souple.
FIG 3 : Le toit selon l'invention en position rangée.
FIG 3A : Le détail 3A de la figure 3 sans la couverture souple.
FIG 4 : Vue du toit non engagé dans les rails de guidage sans la couverture souple.
FIG 5 : Vue agrandie du toit à l'état rangé montrant la couverture souple.
FIG 6 : Vue du toit sans la couverture souple.
FIG 7 : Coupe transversale du toit prise au niveau d'un brancard.
FIG 8 : Une lamelle composant le toit selon l'invention.
FIG 9 : Le toit dans une position ouverte différente de la figure 3
FIG 10 :Le toit rangé dans une position médiane.

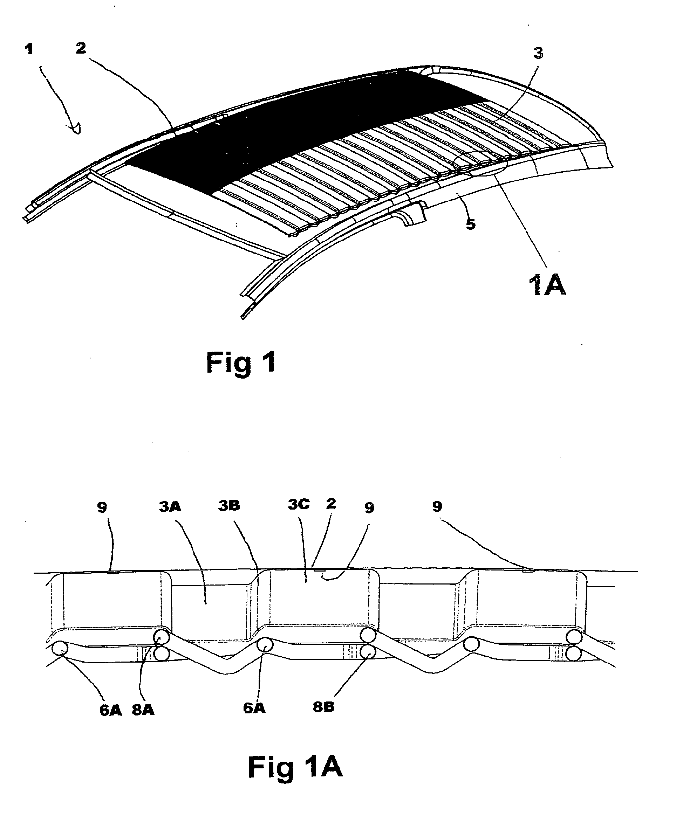

En se reportant au dessin, on voit en perspective un toit 1 souple couvrant l'habitacle (figure 1).

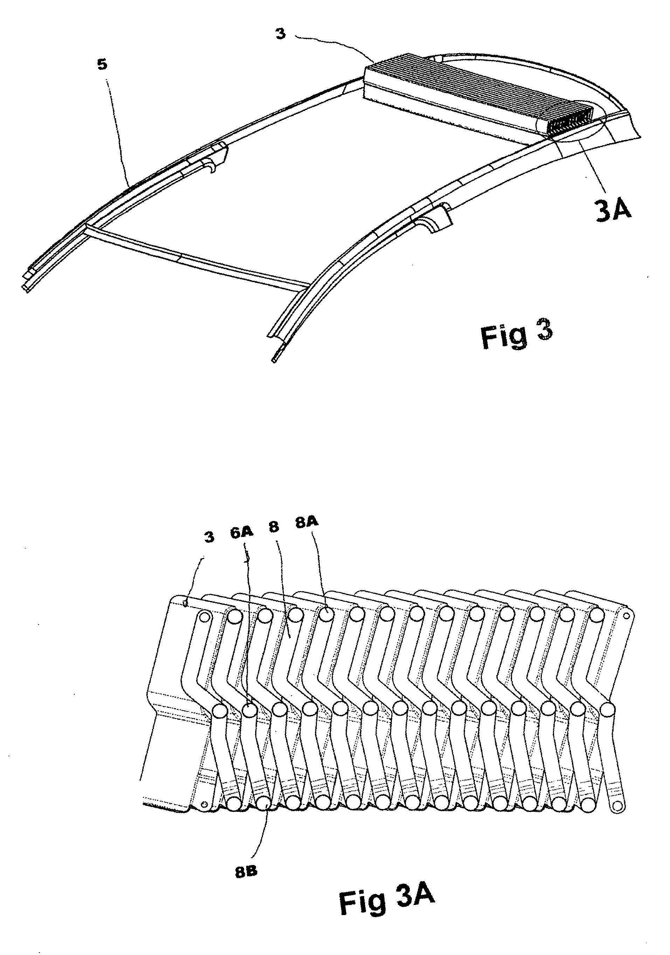

Ce toit comporte une couverture souple 2 qui, fermant une ouverture dans une position dite de service, peut être déplacée vers une position rangée (figures 3,9 ou 10), cette couverture souple étant soutenue par des éléments 3 transverses.

Sur la figure 1 on a représenté partiellement la couverture souple 2 en foncé.

Ce toit mobile s'étend depuis la traverse du pare-brise jusque sensiblement le bord arrière du toit.

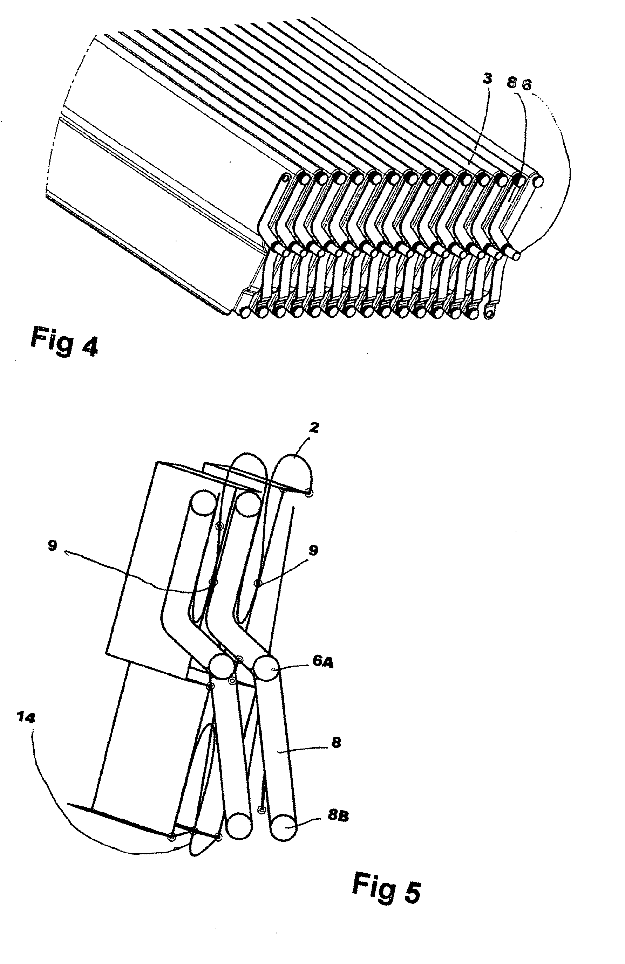

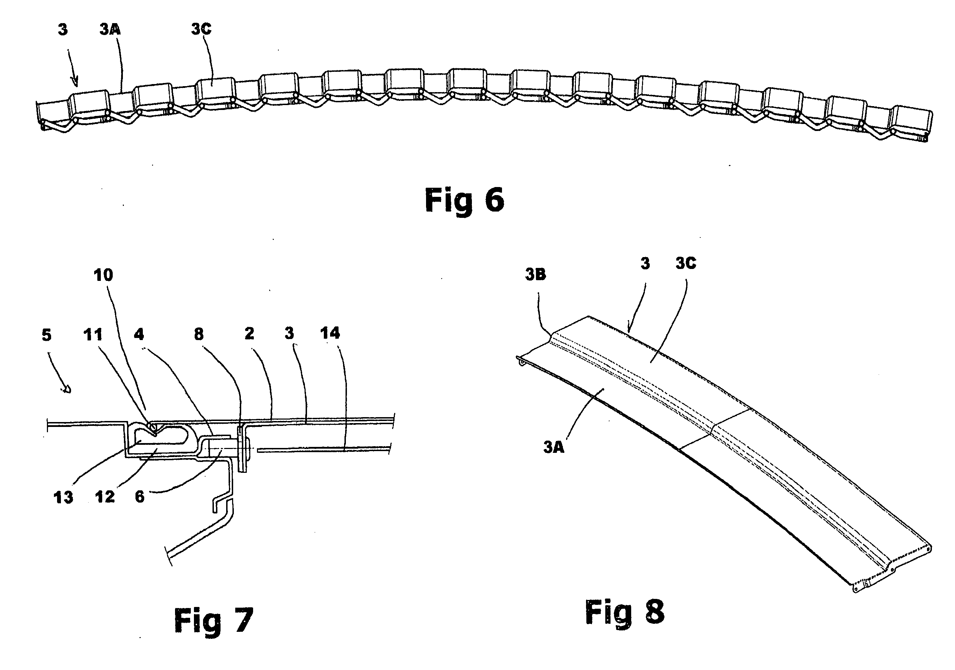

Ces éléments transverses sont guidés en translation dans des rails 4 présentés par les brancards 5 latéraux du véhicule. Les figures 4 et 7 montrent un doigt 6 de guidage d'un élément transverse 3 dans le rail 4.

Lorsque ce toit souple est monté, il n'est pas destiné à être dissocié du véhicule.

Avantageusement, les éléments 3 transverses sont des lamelles 3 minces d'épaisseur constante et sont au moins jointives lorsque le toit est à l'état de service pour constituer une paroi anti-intrusion. Elles sont conformée transversalement pour être plus rigide. De plus, la conformation est telle que les lamelles puissent s'empiler dans un espace longitudinal réduit. Plus précisément, les lamelles sont conformées de sorte qu'elles puissent s'empiler en s'emboitant (fig 4,5) les unes dans les autres par exemple grâce à la mise en forme de marche d'escalier décrite ci après. Selon l'invention on obtient ainsi un rapport entre la longueur du toit fermé et la longueur du toit replié d'environ 18% pour un toit comportant 15 lamelles.

Par mince on comprendra une épaisseur de un millimètre et de préférence 0,7 mm.

De préférence, à l'état de service, il y a superposition des bords des dites lamelles. Il y a un recouvrement partiel.

Avantageusement, la face supérieure de chaque lamelle est conformée pour se présenter sous la forme d'une zone avant 3A, d'une zone de transition 3B et d'une zone arrière 3C, les zones avant 3A et arrière 3C étant dans des plans disposées à des niveaux différents dans l'état fermé du toit (voir figure 6 et 8).Ceci donne à chaque lamelle une forme de marche d'escalier qui augmente sensiblement sa résistance à la flexion.

Cette disposition à plusieurs niveaux facilite le recouvrement partiel des lamelles. On voit clairement cette différence de niveau sur les figures 6 et 8. On peut utiliser la zone avant 3A qui est en contrebas et le creux sous la zone arrière 3C pour loger une bande de matériau (non représentée) faisant en outre office d'amortisseur phonique.

Par lamelle, on comprendra un élément allongé dont la dimension transversale est globalement plus importante que l'épaisseur dudit élément et qui est autoportante. La lamelle est de préférence cintrée dans sa longueur pour donner un galbe au toit

Cette paroi constituée de lamelles 3 rigides va ainsi constituer un barrage, par exemple, pour un couteau. Ces lamelles sont métalliques ou en matériau composite. Elles sont obtenues par emboutissage ou moulage ou autres méthodes.

Les lamelles vont en outre constituer une surface d'appui substantielle pour soutenir et mettre en forme la couverture 2 souple dans sa position de service.

Dans son état rangé, chaque lamelle 3 est pivotée autour d'un axe 6A afin de s'empiler les unes à coté des autres (la face supérieure d'une lamelle se trouvant en regard de la face inférieure de la lamelle contigüe). L'empilement se fait à l'horizontal, les lamelles étant alors basculées pour se positionner sensiblement verticalement.

Pour se faire la lamelle utilise le doigt 6 de guidage comme axe 6A de pivot. Pendant la manoeuvre du toit, le doigt 6 de guidage permet la translation de la lamelle 3 suivant l'axe longitudinal du véhicule et en même temps sert pour la rotation de la lamelle.

Ce doigt de guidage est localisé en partie médiane dans la zone 3B dite de transition.

Des moyens 8 de liaison relient les lamelles pour les faire pivoter les unes par rapport aux autres lors du déplacement du toit et en modifier la distance.

Les lamelles sont donc reliées entre elles par des moyens de liaison provocant à la fois une rotation de la lamelle autour d'un axe et une modification de la distance entre les lamelles lors de la manoeuvre du toit

Ici, ces moyens de liaison sont constitués par un bras 8 monté en balancier qui est articulé en sa partie centrale sur l'axe 6A de pivot d'une lamelle, a l'une 8A de ses extrémités articulée sur le bord arrière de la lamelle qui la précède et l'autre extrémité 8B articulée sur le bord avant de la lamelle qui la suit. On forme ainsi des quadrilatères déformables permettant de compacter le toit à l'état rangé. Le pivot 6A peut être monté dans une lumière oblong du bras 8 pour donner de la courbure au mouvement.

Avantageusement, la couverture souple est fixée localement à chaque lamelle afin que lors du pivotement des dites lamelles dans le sens du rangement du toit, la couverture souple forme des boucles ou des plis qui se logent entre les dites lamelles. La figure 1A montre symboliquement la couverture souple et les points d'attache 9. Ces points d'attache peuvent être ponctuels ou linéaires par engagement de deux formes complémentaires ou par un autre moyen.

Cela permet un bon rangement de la couverture et la formation de plis réguliers.

Si on se reporte maintenant à la figure 7, on voit le doigt 6 qui sert de pivot et de guidage dans un rail 4 ouvert latéralement.

On voit également le bord 10 latéral de la toile qui s'étend latéralement au delà des extrémités des lamelles. Pour son maintien, il sera noté la présence d'un câble 11 de tension solidaire de la couverture souple. Ce câble est fixé sur le bord de la couverture souple et s'étend, à l'état tendu, au dessus d'un joint 12 d'étanchéité à lèvres formant en outre un canal 13 de récupération de l'eau. Ce joint vue en coupe comporte un fond, deux parois latérales et sa partie supérieure est fermée par deux lèvres qui s'appliquent l'une sur l'autre.

En position de service, le câble 11 est tendu.

Dans une forme de réalisation, il existe une toile 14 souple fixée sous les lamelles. Cette toile 14 souple sera fixée de la même manière que pour la couverture souple afin de former des plis internes. Lors du compactage du toit mobile.

Cette disposition dissimule les lamelles et constitue un isolant phonique.

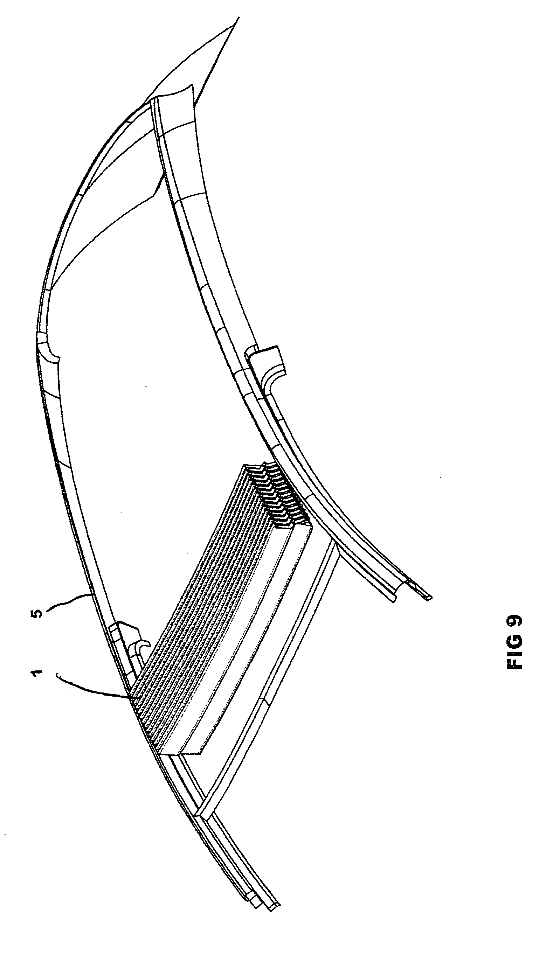

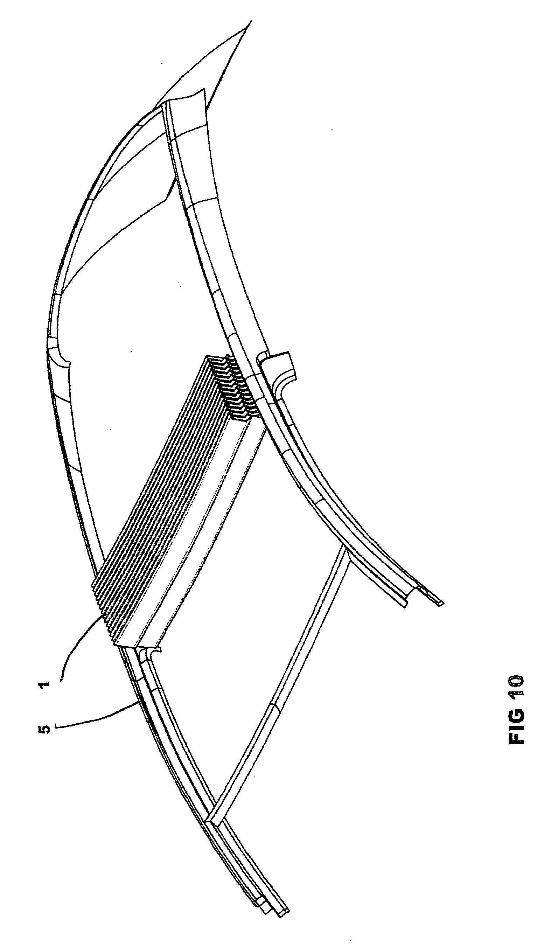

Les figures montrent qu'à l'état rangé, le toit découvrable est déplacé vers l'arrière mais il pourrait être déplacé vers l'avant figure 9 ou en position médiane figure 10.

On obtient ainsi un toit peu encombrant et résistant aux intrusions tout en réduisant le bruit.

Il est en outre simple à produire. Pour en réduire le cout les lamelles 3 et /ou les bras 8 seront de préférence identiques. Le soutien de la couverture souple par les éléments transverses évite que la couverture souple ne se déforme lors du déplacement à grande vitesse. De plus la forme des lamelles en marche d'escalier permet d'éviter leur flexion ce qui garantit la forme du toit. La forme cintrée des éléments transverses permet d'assurer avec précision la courbure du toit. Dans son état ouvert, l'ensemble des lamelles empilées avec la toile insérée entre deux lamelles successives est très compact.

On aura noté figure 7 que la couverture 2 est au même niveau que la face supérieure des brancards 5.

Les rails 4 de guidage sont simples à fabriquer. Ils font partie de la caisse du véhicule.

## Revendications

1. Toit découvrable pour véhicule automobile comportant une couverture (2) souple qui, fermant une ouverture dans une position de service, peut être déplacée vers une position rangée, cette couverture souple étant soutenue par des éléments (3) transverses, ce toit étant **caractérisé en ce que** les éléments transverses sont des lamelles (3) minces d'épaisseurs constantes qui sont au moins jointives lorsque le toit est à l'état de service pour constituer une paroi anti-intrusion et ces lamelles minces ont une section transversale conformée pour les rendre plus rigides.

2. Toit découvrable selon la revendication 1 **caractérisé en ce que** les lamelles minces sont conformées pour permettre un emboitement.

3. Toit découvrable selon la revendication 2 **caractérisé en ce qu'**en position de service, les lamelles (3) se recouvrent partiellement.

4. Toit découvrable selon la revendication 1 ou 2 ou 3 **caractérisé en ce que** les lamelles ont une section transversale en forme de marche d'escalier.

5. Toit découvrable selon l'une quelconque des revendications précédentes **caractérisé en ce que** les lamelles sont cintrées dans le sens de la longueur de la dite lamelle.

6. Toit découvrable selon l'une quelconque des revendications 1 à 4 **caractérisé en ce que** la couverture souple est fixée localement aux lamelles par des points (9) d'attache en sorte de former une boucle entre deux lamelles consécutives lors du déplacement vers l'état rangé.

7. Toit découvrable selon l'une quelconque des revendications précédentes **caractérisé en ce que** chaque lamelle comporte un doigt (6) de guidage en translation faisant également fonction d'axe (6A) de pivot pour la lamelle.

8. Toit découvrable selon l'une quelconque des revendications précédentes **caractérisé en ce que** les lamelles (3) sont reliées entre elles par des moyens de liaison provocant à la fois une rotation de la lamelle autour d'un axe et une modification de la distance entre les lamelles lors de la manoeuvre du toit.

9. Toit découvrable selon la revendication 7 ou 8 **caractérisé en ce que** le doigt (6) de guidage constitue un axe (6A) de pivot pour un bras (8) qui a l'une (8A) de ses extrémités articulée sur le bord arrière de la lamelle qui la précède et l'autre extrémité (8B) articulée sur le bord avant de la lamelle qui la suit.

10. Toit découvrable selon l'une quelconque des revendications précédentes **caractérisé en ce qu'**il comporte une toile (14) souple fixée sur la face inférieure des lamelles.

11. Toit découvrable selon la revendication 1 **caractérisé en ce qu'**il comprend des bandes de matériau fixées sur les zones avant (3A) et/ou dans le creux sous les zones arrières (3B) de la forme en marche d'escalier.

12. Toit découvrable selon l'une quelconque des revendications précédentes **caractérisé en ce que** les bords latéraux de la couverture souple sont munis d'un câble (11) de tension.

13. Toit découvrable selon la revendication 12 **caractérisé en ce que** le câble de tension s'étend, à l'état tendu, au dessus d'un joint (12) d'étanchéité à lèvres formant canal d'évacuation.

14. Véhicule **caractérisé en ce qu'**il comprend un toit selon l'une quelconque des revendications précédentes.

## Revendications modifiées

### Revendications modifiées conformément à la règle 137(2) CBE.

**1.** Toit découvrable pour véhicule automobile comportant une couverture (2) souple qui, fermant une ouverture dans une position de service, peut être déplacée vers une position rangée, cette couverture souple étant soutenue par des éléments (3) transverses, ce toit étant **caractérisé en ce que** les éléments transverses sont des lamelles (3) minces d'épaisseurs constantes qui sont au moins jointives lorsque le toit est à l'état de service pour constituer une paroi anti-intrusion et ces lamelles minces sont *conformés transversalement* pour les rendre plus rigides *qu'à l'état plan.*

**2.** Toit découvrable selon la revendication 1 **caractérisé en ce que** les lamelles minces sont conformées *en marche d'escalier* pour permettre un emboitement *dans la position rangée.*

**3.** Toit découvrable selon la revendication 2 **caractérisé en ce qu'**en position de service, les lamelles (3) se recouvrent partiellement.

**4.** Toit découvrable selon la revendication 1 **caractérisé en ce que** les lamelles ont une section transversale en forme de marche d'escalier.

**5.** Toit découvrable selon l'une quelconque des revendications précédentes **caractérisé en ce que** les lamelles sont cintrées dans le sens de la longueur de la dite lamelle.

**6.** Toit découvrable selon l'une quelconque des revendications 1 à 4 **caractérisé en ce que** la couverture souple est fixée localement aux lamelles par des points (9) d'attache en sorte de former une boucle entre deux lamelles consécutives lors du déplacement vers l'état rangé.

**7.** Toit découvrable selon l'une quelconque des revendications précédentes **caractérisé en ce que** chaque lamelle comporte un doigt (6) de guidage en translation faisant également fonction d'axe (6A) de pivot pour la lamelle.

**8.** Toit découvrable selon l'une quelconque des revendications précédentes **caractérisé en ce que** les lamelles (3) sont reliées entre elles par des moyens de liaison provocant à la fois une rotation de la lamelle autour d'un axe et une modification de la distance entre les lamelles lors de la manoeuvre du toit.

**9.** Toit découvrable selon la revendication 7 ou 8 **caractérisé en ce que** le doigt (6) de guidage constitue un axe (6A) de pivot pour un bras (8) qui a l'une (8A) de ses extrémités articulée sur le bord arrière de la lamelle qui la précède et l'autre extrémité (8B) articulée sur le bord avant de la lamelle qui la suit.

**10.** Toit découvrable selon l'une quelconque des revendications précédentes **caractérisé en ce qu'**il comporte une toile (14) souple fixée sur la face inférieure des lamelles.

**11.** Toit découvrable selon la revendication 1 **caractérisé en ce qu'**il comprend des bandes de matériau fixées sur les zones avant (3A) et/ou dans le creux sous les zones arrières (3B) de la forme en marche d'escalier.

**12.** Toit découvrable selon l'une quelconque des revendications précédentes **caractérisé en ce que** les bords latéraux de la couverture souple sont munis d'un câble (11) de tension.

**13.** Toit découvrable selon la revendication 12 **caractérisé en ce que** le câble de tension s'étend, à l'état tendu, au dessus d'un joint (12) d'étanchéité à lèvres formant canal d'évacuation.

**14.** Véhicule **caractérisé en ce qu'**il comprend un toit selon l'une quelconque des revendications précédentes.
